# DEMANDE DE BREVET EUROPEEN

(11) **EP 1 038 886 A1**
(43) Date de publication de la demande: **27.09.2000**
(21) Numéro de dépôt: 00200847.2
(22) Date de dépôt: 09.03.2000
(51) Int. Cl.: C08F 10/02, C08F 4/24, C08F 4/02

(54) **Procédé pour la production de polymères d'éthylène**

(30) Priorité: 23.03.1999 BE 9900203
(71) Demandeur: SOLVAY POLYOLEFINS EUROPE - BELGIUM (Société Anonyme), 1050 Bruxelles (BE)
(72) Inventeur: Lhost, Olivier, 7021 Havre (BE); Dewaele, Nicole, 5081 La Bruyère (BE); Frederickx, Martine, 1421 Ophain Bois-Seigneur Isaac (BE); Kaisin, Joel, 5140 Ligny (BE)
(74) Mandataire: Destryker, Elise Martine

(57) **Abrégé**

L'invention concerne un procédé pour la production de polymères de l'éthylène par polymérisation ou copolymérisation d'éthylène avec une ou plusieurs oléfines en C₃ à C₈ au contact d'un catalyseur à base de chrome déposé sur un support constitué essentiellement de silice. Selon l'invention, le catalyseur au chrome est soumis successivement à un traitement thermique sous azote, puis à un traitement thermique sous air dans des conditions de température définies avant de le mettre en contact avec l'éthylène et éventuellement une ou plusieurs oléfines dans des conditions polymérisantes.

Le procédé de l'invention permet la fabrication de polymères de l'éthylène présentant un compromis processabilité - rigidité - résistance à la fissuration lente amélioré.

## Description

La présente invention concerne un procédé pour la production de polymères de l'éthylène par polymérisation d'éthylène ou copolymérisation d'éthylène et d'une ou plusieurs oléfines à l'intervention d'un catalyseur à base de chrome déposé sur de la silice. Elle concerne plus particulièrement un procédé pour produire des polymères d'éthylène présentant un compromis rigidité - processabilité - résistance à la fissuration lente amélioré.

Il est bien connu de produire des polymères de l'éthylène (homo- et copolymères) par mise en oeuvre à la (co)polymérisation de l'éthylène de catalyseurs à base de chrome déposés sur un support à base de silice. Il est également connu que l'on peut améliorer l'activité de tels catalyseurs en les soumettant à un traitement thermique sous air à température élevée. Ces catalyseurs activés conviennent bien pour produire des polymères d'éthylène combinant des indices de fluidité faibles (c'est-à-dire des masses moléculaires moyennes élevées) et des densités élevées. Les polymères d'éthylène présentant une densité élevée présentent généralement une rigidité élevée, ce qui permet de réduire le poids des objets façonnés à leur intervention sans perte notable des propriétés mécaniques. Cependant, l'élévation de la rigidité se fait généralement au détriment de la résistance à la fissuration lente. Pour de nombreuses applications des polymères de l'éthylène, telles que les corps creux et les tubes destinés à contenir ou à transporter des liquides et des fluides divers, il est primordial de disposer de polymères qui présentent à la fois une rigidité et une résistance à la fissuration lente élevées.

La demande de brevet EP-A- 882 740 décrit des moyens pour améliorer la résistance à la fissuration des polymères d'éthylène obtenus à l'intervention de catalyseurs à base de chrome et de titane déposés dans des supports comprenant de la silice. Ce résultat est atteint par mise en oeuvre à la (co)polymérisation de l'éthylène d'un catalyseur produit comme : suit dépôt de chrome sur le support, déshydratation du catalyseur à base de chrome par chauffage sous une atmosphère de gaz inerte sec à une température au moins égale à 300°C, titanation du catalyseur à base de chrome par mise en contact avec un composé de titane à une température de 300°C au moins dans une atmosphère de gaz inerte sec et enfin activation du catalyseur à base de chrome titané par traitement thermique sous air sec à une température de 500 à 900°C. L'étape de déshydratation du catalyseur à base de chrome a pour but d'éviter la formation de TiO₂ par réaction d'eau avec le composé de titane au cours de l'étape subséquente de titanation.

La présente invention a pour objet de procurer un procédé pour la production de polymères d'éthylène à l'intervention d'un catalyseur à base de chrome déposé sur un support constitué essentiellement de silice qui présentent un bon compromis entre la processabilité, la rigidité et la résistance à la fissuration lente.

A cet effet, l'invention concerne un procédé pour la production de polymères de l'éthylène par polymérisation ou copolymérisation d'éthylène avec une ou plusieurs oléfines on C₃ à C₈ au contact d'un catalyseur à base de chrome déposé sur un support constitué essentiellement de silice selon lequel le catalyseur à base de chrome déposé sur la silice est soumis successivement à un traitement thermique sous azote à une température supérieure à 350°C et inférieure à 850°C, puis à un traitement thermique sous air à une température supérieure à 350°C et inférieure à 800°C avant de le mettre en contact avec l'éthylène et éventuellement une ou plusieurs oléfines dans des conditions polymérisantes pour produire un polymère d'éthylène.

L'invention est basée sur la constatation surprenante que le traitement thermique sous azote, dans les conditions thermiques définies ci-dessus, préalable à l'activation thermique sous air (classique) d'un catalyseur à base de chrome déposé sur un support constitué essentiellement de silice contribue à une amélioration du compromis rigidité - processabilité - résistance à la fissuration lente des polymères d'éthylène produits. Le procédé selon l'invention permet dès lors, notamment, la production de polymères d'éthylène présentant une résistance à la fissuration lente nettement améliorée à rigidité et processabilité données. En corollaire, il permet la production de polymères d'éthylène de densité et donc de rigidité plus élevées sans réduction notable de la résistance à la fissuration lente.

Les traitements thermiques sous azote, respectivement sous air, s'effectuent de préférence à une température au moins égale à 480°C et qui, par ailleurs, ne dépasse pas 760°C. D'excellents résultats sont obtenus lorsque les traitements thermiques sous azote, respectivement sous air sont effectués à une température au moins égale à 530°C et qui ne dépasse pas 715°C. Il est entendu que le traitement thermique sous azote et le traitement thermique sous air ne doivent pas être réalisés à la même température. De préférence, la température du traitement thermique sous air ne dépasse pas celle du traitement thermique sous azote. Avantageusement, on utilise des températures similaires sinon identiques pour les deux traitements thermiques successifs.

La durée du traitement thermique sous azote n'est pas critique. Généralement, elle sera comprise entre quelques minutes et quelques heures, le plus souvent entre 10 minutes et 20 heures. D'excellents résultats sont obtenus avec des durées de traitement thermique sous azote de 6 à 16 heures. De même, la durée du traitement thermique sous air n'est pas critique. Le plus souvent, elle sera comprise entre 5 minutes et 6 heures. D'excellents résultats sont obtenus avec des durées de traitement thermique sous air de 30 min à 2 heures.

Les traitements thermiques sous azote et sous air du catalyseur à base de chrome supporté sur de la silice peuvent être réalisés selon toute méthode connue de mise en contact de gaz et de solides, telle que dans un lit statique ou fluidisé. Avantageusement, ces traitements thermiques ont lieu en lit fluidisé, le catalyseur supporté étant maintenu à l'état fluidisé au moyen des gaz, azote et air respectivement, utilisés dans les deux étapes de traitement thermique.

La montée en température jusqu'à la température du traitement thermique sous azote s'effectue avantageusement sous balayage au moyen d'un gaz non oxydant tel que par exemple l'azote, le monoxyde de carbone, l'hydrogène et leurs mélanges. Elle s'effectue, de préférence, sous balayage à l'azote.

A la fin du traitement thermique sous air, le catalyseur est, de manière connue, refroidi jusqu'à la température ambiante en vue de sa récupération et de son stockage sous protection d'azote jusqu'à as mise en oeuvre à la polymérisation. Pour ce faire, on peut remplacer l'air par de l'azote à la fin du traitement thermique à l'air et réduire progressivement la température du catalyseur jusqu'à la température ambiante sous balayage à l'azote. Un mode de réalisation préféré consiste à refroidir le catalyseur progressivement sous air, généralement jusqu'à une température comprise entre 300 et 400°C, avantageusement jusqu'à environ 350°C, puis à continuer le refroidissement jusqu'à la température ambiante en le maintenant sous balayage à l'azote avant de le récupérer et de le stocker sous protection d'azote.

Le support du catalyseur à base de chrome mis en oeuvre dans le procédé de l'invention est constitué essentiellement de silice, c'est-à-dire qu'il est substantiellement exempt d'autres oxydes. La teneur en silice de ces supports est en général au moins égale à 99,9% en poids.

Le support en silice présente en général une surface spécifique de 100 à 800 m²/g, mesurée selon la méthode volumétrique BET de la norme britannique BS 4359/1 (1984). Le plus souvent, la surface spécifique ne dépasse pas 500 m²/g. De préférence, elle est de 150 à 400 m²/g.

Par ailleurs, le support en silice présente en général un volume poreux d'environ 0,5 à 4 cm³/g. De préférence, le volume poreux est d'environ 1 à 3 cm³/g. Par volume poreux, on entend désigner le volume poreux mesuré selon la méthode de pénétration à l'azote (BET) par référence à la norme britannique BS 4359/1 (1984).

Le catalyseur à base de chrome déposé dans un support constitué essentiellement de silice mis en oeuvre dans le procédé selon l'invention contient habituellement d'environ 0,1 à 5 % en poids et plus particulièrement encore de 0,5 à 1,5% en poids de chrome (exprimés par rapport au poids de catalyseur supporté). On peut bien entendu utiliser des mélanges de catalyseurs à base de chrome déposés sur des supports constitués essentiellement de silice.

Le mode d'obtention du catalyseur au chrome supporté sur silice n'est pas critique. A titre d'exemples non limitatifs de catalyseurs au chrome déposés sur un support constitué essentiellement de silice qui sont utilisables dans le procédé selon l'invention, on peut mentionner les catalyseurs commerciaux EP30X (commercialisé par Crosfield) et HA 30W (commercialisé par Grace Davison).

Selon l'invention, les catalyseurs au chrome supportés sur silice ayant subi des traitements thermiques successifs sous azote et sous air dans des conditions appropriées de température et de durée sont mis en oeuvre à la polymérisation de l'éthylène ou à sa copolymérisation avec des oléfines en C₃ à C₈. A titre d'exemples d'oléfines utilisables comme comonomères, on peut mentionner le propylène, le butène-1, le 4-méthyl-pentène-1, l'hexène-1 et le 1-octène. On peut bien entendu mettre en oeuvre simultanément plusieurs oléfines.

Le procédé selon l'invention s'applique particulièrement bien à la fabrication d'homopolymères de l'éthylène et de copolymères contenant au moins 90% molaires d'éthylène et, notamment, des co- et terpolymères statistiques de l'éthylène et de butène-1 et/ou d'hexène-1 ou encore des copolymères séquencés obtenus par polymérisation séquencée de mélanges d'éthylène et de butène et/ou d'hexène.

La (co)polymérisation est réalisée, de manière connue, par mise en contact de l'éthylène et éventuellement des autres oléfines avec le catalyseur dans des conditions polymérisantes connues en tant que telles. La (co)polymérisation de l'éthylène peut être effectuée selon tout procédé connu, en solution dans un solvant, en suspension dans un diluant hydrocarboné ou encore en phase gazeuse. Avantageusement, elle s'effectue en suspension dans un diluant inerte tel que l'isobutane. La température de polymérisation est typiquement comprise entre 20 et 130°C et la pression entre la pression atmosphérique et 100.10⁵ Pa, de préférence entre 10.10⁵ et 55.10⁵ Pa.

Les polymères de l'éthylène produits selon le procédé de la présente invention présentent un excellent compromis entre la rigidité, la processabilité et la résistance à la fissuration lente. Ils peuvent être mis en oeuvre par tous les procédés classiques de transformation des matières thermoplastiques, tels que par exemple l'extrusion et l'extrusion-soufflage. Ils conviennent bien pour l'extrusion- soufflage de corps creux et l'extrusion de tubes, en particulier pour l'extrusion-soufflage de corps creux tels que les corps creux de poids réduit ("lightweighting").

Les exemples qui suivent sont destinés à illustrer le procédé de l'invention.
La signification des symboles utilisés dans ces exemples et, le cas échéant, les unités exprimant les grandeurs mentionnées et les méthodes de mesure de ces grandeurs sont explicitées ci-dessous :
- HLMI: : indice de fluidité en fondu du polyéthylène mesuré sous une charge de 21,6 kg à 190°C, exprimé en g/10 min et mesuré selon la norme ASTM D 1238 (1986).
- MVS: : masse volumique standard du polymère d'éthylène exprimée en kg/m³ et mesurée selon la norme ISO 1183 (1987).
- µ₂: : viscosité capillaire mesurée à 190°C avec une filière 30/2 à un gradient de vitesse de 100 sec⁻¹, exprimée en poises.
- ηᵢ: : viscosité inhérente, exprimée en l/g.
- ESCR: : résistance à la fissuration lente, exprimée en heures, mesurée selon la norme ASTM D 1693-70 (1988), conditions A, par immersion d'une plaque, obtenue selon la norme ASTM D 1928-90 par compression du polymère, dans une solution aqueuse contenant 10% en volume de nonylphénoxy-poly(éthylèneoxy)éthanol, à 50°C.
Les exemples 1 à 3 concernent l'homopolymérisation de l'éthylène dans l'isobutane. Les exemples 4 et 5 concernent la copolymérisation de l'éthylène et de l'hexène dans l'isobutane.
Dans les exemples 1 (selon l'invention) et 2 (comparatif), on a utilisé comme catalyseur un mélange de deux catalyseurs commerciaux à base de chrome déposé sur un support constitué essentiellement de silice contenant 60% en poids de catalyseur EP30X et 40% en poids de catalyseur HA30W. Dans les exemples 3 et 4 (selon l'invention) et dans l'exemple 5 (comparatif), on a utilisé le catalyseur EP30X seul.

Les exemples 1, 3 et 4 illustrent des traitements thermiques successifs du catalyseur sous azote et sous air. Les exemples 2 et 5 (comparatifs) illustrent un traitement unique sous air.

### Exemple 1

### 1.1. Traitement du catalyseur.

Dans un réacteur à lit fluidisé, 15 g de catalyseur (cf. ci-dessus) sont soumis aux étapes de traitement successives suivantes :
- augmentation de la température jusqu'à 705° C (à une vitesse de 10 °C/min.) sous balayage d'azote;
- maintien de la température de 705° C et du balayage d'azote pendant 15 heures;
- substitution de l'azote par de l'air;
- maintien de la température de 705° C et du balayage d'air pendant 1 heure;
- diminution de la température jusque 350 °C (à une vitesse de -10° C/min) sous balayage d'air;
- substitution de l'air par de l'azote;
- maintien de la température de 350° C et du balayage d'azote pendant 40 min.;
- diminution de la température (à une vitesse de -10 °C/min.) jusqu'à la température ambiante sous balayage d'azote;
- récupération du catalyseur sous protection d'azote en vue de sa mise en oeuvre à la polymérisation.

Le catalyseur activé présente les propriétés suivantes : Surface spécifique mesurée par BET : 324 m²/g; Volume poreux mesuré par pénétration à l'azote (BET) : 1.59 cm³ /g; Teneur en Cr^{VI} : 7.1 g Cr/kg de catalyseur.

### 1.2. Polymérisation de l'éthylène

Dans un autoclave de 3 litres préalablement séché et muni d'un agitateur, on a introduit 194 mg du catalyseur activé obtenu selon la procédure décrite sous le point 1.1 ci-dessus et 1 litre d'isobutane. La température a été élevée à 103 °C et de l'éthylène a été introduit dans l'autoclave de telle manière que la teneur en éthylène dans l'isobutane liquide atteigne 7 % molaire. La pression d'éthylène et la température ont alors été maintenues constantes durant 139 minutes pour produire 472 g de polyéthylène. Après dégazage, le polymère a été récupéré sous forme de particules de fluff. Le polyéthylène recueilli présente les propriétés suivantes :
HLMI = 7.1 g/10 min.;
MVS = 959.1 kg/m³;
µ₂ = 25400 poises
ηᵢ = 0.280 l/g;
ESCR = 76 h.

### Exemple 2 (comparatif)

### 2.1. Traitement du catalyseur

Dans un réacteur à lit fluidisé, 15 g de catalyseur identique à celui mis en oeuvre à l'exemple 1 (cf. ci-dessus) sont soumis aux étapes de traitement successives suivantes :
- augmentation de la température jusqu'à 705° C (à une vitesse de 10 °C/min.) sous balayage d'air;
- maintien de la température de 705 °C et du balayage d'air pendant 16 heures;
- diminution de la température jusque 350 °C (à une vitesse de -10 °C/min) sous balayage d'air;
- substitution de l'air par de l'azote;
- maintien de la température de 350 °C et du balayage d'azote pendant 40 min.;
- diminution de la température (à une vitesse de -10° C/min.) jusqu'à la température ambiante sous balayage d'azote;
- récupération du catalyseur sous protection d'azote en vue de sa mise en oeuvre à la polymérisation.
Le catalyseur activé présente les propriétés suivantes :
Surface spécifique mesurée par BET : 307 m²/g;
Volume poreux mesuré par pénétration à l'azote (BET) : 1.68 cm³ /g;
Teneur en Cr^{VI} : 7.3 g Cr/kg catalyseur.

### 2.2. Polymérisation de l'éthylène

Dans un autoclave de 3 litres préalablement séché et muni d'un agitateur, on a introduit 157 mg du catalyseur obtenu selon la procédure décrite au point 2.1 ci-dessus et 1 litre d'isobutane. La température a été élevée à 100 °C et de l'éthylène a été introduit dans l'autoclave de telle manière que la teneur en éthylène dans l'isobutane liquide atteigne 7 % molaire. La pression d'éthylène et la température ont alors été maintenues constantes durant 171 minutes pour produire 426 g de polyéthylène. Après dégazage, le polymère a été récupéré sous forme de particules de fluff. Le polyéthylène recueilli présente les propriétés suivantes :
HLMI = 7.5 g/10 min.;
MVS = 959.1 kg/m³;
µ₂ = 25000 poises
ηᵢ = 0.266 l/g;
ESCR = 27.5 heures

### Exemple 3

### 3.1. Traitement du catalyseur

Dans un réacteur à lit fluidisé, 15 g de catalyseur commercial EP30X sont soumis aux étapes de traitement successives décrites à l'exemple 1 (traitement thermique à l'azote à 705°C pendant 15 heures et traitement thermique à l'air à 705°C pendant 1 heure).

Le catalyseur activé présente les propriétés suivantes :
Surface spécifique mesurée par BET : 271 m²/g;
Volume poreux mesuré par pénétration à l'azote (BET) : 1.72 cm³/g;
Teneur en Cr^{VI} : 7.1 g Cr/kg catalyseur.

### 3.2. Polymérisation de l'éthylène

Dans un autoclave de 3 litres préalablement séché et muni d'un agitateur, on a introduit 164 mg du catalyseur obtenu selon la procédure décrite au point 3.1 ci-dessus et 1 litre d'isobutane. La température a été élevée à 106° C et de l'éthylène a été introduit dans l'autoclave de telle manière que la teneur en éthylène dans l'isobutane liquide atteigne 7 % molaire. La pression d'éthylène et la température ont alors été maintenues constantes durant 181 minutes pour produire 442 g de polyéthylène. Après dégazage, le polymère a été récupéré sous forme de particules de fluff. Le polyéthylène recueilli présente les propriétés suivantes :
HLMI = 26 g/10min.
MVS = 959.5 kg/m³;
µ₂ = 16500 poises
ηᵢ = 0.227 l/g;
ESCR = 70.1 h.

La comparaison des résultats des exemples selon l'invention 1 et 3, et en particulier ceux de l'exemple 1, avec ceux de l'exemple de comparaison 2 montre à suffisance l'amélioration du compromis rigidité - processabilité - résistance à la fissuration lente des homopolymères d'éthylène produits selon le procédé de la présente invention et, en l'occurrence, l'amélioration de la résistance à la fissuration lente pour des rigidités et des processabilités similaires.

### Exemple 4

### 4.1. Traitement du catalyseur

Dans un réacteur à lit fluidisé, 15 g de catalyseur commercial EP30X sont soumis aux étapes de traitement successives décrites à l'exemple 1 (traitement thermique à l'azote à 705°C pendant 15 heures et traitement thermique à l'air à 705°C pendant 1 heure).

Le catalyseur activé présente les propriétés suivantes : Surface spécifique mesurée par BET : 276 m²/g; Volume poreux mesuré par pénétration à l'azote (BET) : 1.70 cm³/g; Teneur en Cr^{VI} : 7.2 g Cr/kg catalyseur.

### 4.2. Copolymérisation de l'éthylène

Dans un autoclave de 5 litres préalablement séché et muni d'un agitateur, on a introduit 243 mg du catalyseur obtenu selon la procédure décrite au point 4.1 ci-dessus et 1.5 litre d'isobutane. La température a été élevée à 106°C et de l'éthylène et de l'hexène ont été introduits dans l'autoclave de telle manière que la teneur en éthylène dans l'isobutane liquide atteigne 7 % molaire et le rapport molaire hexène/éthylène soit de 0.02. La pression d'éthylène et la température ont alors été maintenues constantes durant 170 minutes pour produire 611 g de polyéthylène. Après dégazage, le polymère a été récupéré sous forme de particules de fluff. Le copolymère d'éthylène recueilli présente les propriétés suivantes :
HLMI = 18.3 g/10 min.
MVS = 956.8 kg/m³;
µ₂ = 19000 poises
ηᵢ = 0.229 l/g;
ESCR = 44.8 h.

### Exemple 5 (comparatif)

### 5.1. Traitement du catalyseur

Dans un réacteur à lit fluidisé, 15 g de catalyseur commercial EP30X sont soumis aux étapes de traitement successives décrites à l'exemple 2 (traitement thermique à l'air à 705°C pendant 16 heures).

Le catalyseur activé présente les propriétés suivantes :
Surface spécifique mesurée par BET : 258 m²/g;
Volume poreux mesuré par pénétration à l'azote (BET) : 1.77 cm³/g;
Teneur en Cr^{VI} : 5.9 g Cr/kg catalyseur.

### 5.2. Copolymérisation de l'éthylène

Dans un autoclave de 5 litres préalablement séché et muni d'un agitateur, on a introduit 232 mg du catalyseur obtenu selon la procédure décrite au point 5.1 et 1.5 litre d'isobutane. La température a été élevée à 103° C et de l'éthylène et de l'hexène ont été introduits dans l'autoclave de telle manière que la teneur en éthylène dans l'isobutane liquide atteigne 7 % molaire et le rapport molaire hexène/éthylène soit de 0.02. La pression d'éthylène et la température ont alors été maintenues constantes durant 193 minutes pour produire 564 g de polyéthylène. Après dégazage, le polymère a été récupéré sous forme de particules de fluff. Le copolymère d'éthylène recueilli présente les propriétés suivantes:
HLMI = 16.8 g/10 min.
MVS = 956.5 kg/m3;
µ₂ = 18400 poises
ηᵢ = 0.223 l/g;
ESCR = 36.6 h.

La comparaison des résultats de l'exemple 4 selon l'invention avec ceux de l'exemple 5 (comparatif) montre l'amélioration du compromis rigidité - processabilité - résistance à la fissuration lente des copolymères d'éthylène produits selon le procédé de l'invention et, en l'occurrence, l'amélioration de la résistance à la fissuration lente pour des rigidités et des processabilités similaires.

Il est entendu que le procédé selon l'invention permet également de produire des polymères d'éthylène présentant des rigidités plus élevées (traduites par des valeurs de MVS plus élevées) pour des valeurs de processabilité et de résistance à la fissuration lente données.

## Revendications

1. Procédé pour la production de polymères de l'éthylène par polymérisation ou copolymérisation d'éthylène avec une ou plusieurs oléfines en C₃ à C₈ au contact d'un catalyseur à base de chrome déposé sur un support constitué essentiellement de silice selon lequel le catalyseur à base de chrome déposé sur la silice est soumis successivement à un traitement thermique sous azote à une température supérieure à 350°C et inférieure à 850°C, puis à un traitement thermique sous air à une température supérieure à 350°C et inférieure à 800°C avant de le mettre en contact avec l'éthylène et éventuellement une ou plusieurs oléfines dans des conditions polymérisantes pour produire un polymère d'éthylène.

2. Procédé pour la production de polymères de l'éthylène suivant la revendication 1, caractérisé en ce que les traitements thermiques sous azote, respectivement sous air sont effectués à une température au moins égale à 480°C et qui ne dépasse pas 760°C.

3. Procédé pour la production de polymères de l'éthylène suivant les revendications 1 ou 2, caractérisé en ce que les traitements thermiques sous azote, respectivement sous air sont effectués à une température au moins égale à 530°C et qui ne dépasse pas 715°C.

4. Procédé pour la production de polymères de l'éthylène suivant les revendications 1 à 3, caractérisé en ce que la durée du traitement thermique sous azote est comprise entre 10 minutes et 20 heures.

5. Procédé pour la production de polymères de l'éthylène suivant les revendications 1 à 4, caractérisé en ce que la durée du traitement thermique sous air est comprise entre 5 minutes et 6 heures.

6. Procédé pour la production de polymères de l'éthylène suivant les revendications 1 à 5, caractérisé en ce que le support constitué essentiellement de silice présente une surface spécifique BET de 100 à 800 m²/g et un volume poreux de 0,5 à 4 cm³/g.

7. Procédé pour la production de polymères de l'éthylène suivant les revendications 1 à 6, caractérisé en ce que le catalyseur à base de chrome déposé sur un support constitué essentiellement de silice contient de 0,1 à 5% en poids de chrome.

8. Procédé pour la production de polymères de l'éthylène suivant les revendications 1 à 7, caractérisé on ce qu'il est appliqué à la production d'homopolymères de l'éthylène ou de copolymères statistiques ou séquencés de l'éthylène et de butène et/ou d'hexène contenant au moins 90% molaires d'éthylène.

9. Procédé pour la production de polymères de l'éthylène suivant les revendications 1 à 8, caractérisé en ce qu'il est appliqué à la polymérisation ou la copolymérisation de l'éthylène en suspension dans l'isobutane.
